# EUROPÄISCHE PATENTANMELDUNG

(11) **EP 4 427 645 A2**
(43) Veröffentlichungstag der Anmeldung: **11.09.2024**
(21) Anmeldenummer: 24162698.5
(22) Anmeldetag: 11.03.2024
(51) Int. Cl.: A47J 37/06, F24C 7/06, F24C 7/08, F24C 15/00, F24C 15/16, F24C 7/04

(54) **LEBENSMITTEL-GARGERÄT ZUM ERHITZEN UND/ODER GAREN VON LEBENSMITTELN**

(30) Priorität: 10.03.2023 DE 202023101177 U
(71) Anmelder: reamotion GmbH, 27753 Delmenhorst (DE)
(72) Erfinder: Reales Bertomeo, Emilio, 27753 Delmenhorst (DE)
(74) Vertreter: Eisenführ Speiser

(57) **Zusammenfassung**

Die Erfindung betrifft ein Lebensmittel-Gargerät (1) zum Erhitzen und/oder Garen von Lebensmitteln, insbesondere Fleischerzeugnissen und/oder Tiefkühlprodukten, mit einem Geräte-Gehäuse (2), wenigstens einem im Gehäuse (2) angeordneten Garraum (4) für das Lebensmittel, wobei der Garraum über wenigstens eine Öffnung (6) im Gehäuse (2) zugänglich ist, einer dem Garraum (4) zugeordneten Heizeinrichtung (28) mit mehreren Strahlungs-Heizelementen (30, 30`) zum Erzeugen von Wärmestrahlung, und einer Steuereinheit (18) zum Steuern des Gargerätes (1), die mit der Heizeinrichtung (28) signalleitend gekoppelt ist, wobei die Steuereinheit (18) zum getakteten Ansteuern der Strahlungs-Heizelemente (30, 30`) ausgebildet ist, derart, dass mindestens eines der mehreren Heizelemente (30, 30`) über zumindest eine vorbestimmbare Zeitdauer für ein definiertes Zeitintervall einschaltbar und für ein definiertes Zeitintervall ausschaltbar ist.

## Beschreibung

Die Erfindung bezieht sich auf ein Lebensmittel-Gargerät zum Erhitzen und/oder Garen von Lebensmitteln, insbesondere Fleischerzeugnissen und/oder Tiefkühlprodukten, mit einem Geräte-Gehäuse, wenigstens einem im Gehäuse angeordneten Garraum für das Lebensmittel, wobei der Garraum über wenigstens eine Öffnung im Gehäuse zugänglich ist, einer dem Garraum zugeordneten Heizeinrichtung mit mehreren Strahlungs-Heizelementen, und einer Steuereinheit zum Steuern des Gargerätes, die mit der Heizeinrichtung signalleitend gekoppelt ist. Des Weiteren bezieht die Erfindung sich auch auf ein Verfahren zum Zubereiten von Lebensmitteln, insbesondere von Fleischerzeugnissen und/oder Tiefkühlprodukten.

Bei der Zubereitung von Lebensmitteln in der Gastronomie, insbesondere der Schnellgastronomie, werden unter anderem Fleischerzeugnisse, wie Bratwürste oder Burger-Scheiben, mithilfe von Grill- oder Brateinheiten, und Tiefkühlprodukte, wie beispielsweise Pommes Frites oder Kroketten, mittels Fritteusen zubereitet. Um eine schnelle Zubereitung der verschiedenen Lebensmittel zu gewährleisten, werden die Grill- oder Brateinheiten und Fritteusen in den Bereitschaftszeiten, wenn kein Lebensmittel zubereitet wird, häufig durchgehend auf entsprechend hohen Temperaturen gehalten. Das Halten der Grill- oder Brateinheiten bzw. Fritteusen auf dem benötigten Temperaturniveau ist mit einem stetigen, vergleichsweise hohen Energiebedarf verbunden, auch wenn nur ein Bruchteil für die eigentliche Zubereitung eines Lebensmittels aufgewendet wird.

Wegen der sich stetig verringernden Energieressourcen und den in Verbindung mit der Ressourcenknappheit steigenden Energiepreisen gepaart mit dem weiter zunehmenden Bewusstsein weniger Energie zu verbrauchen, besteht auch im Gastronomiebereich das Bestreben beim Zubereiten von Lebensmitteln Energie einzusparen und somit auch die Kosten für das Zubereiten der Lebensmittel zu minimieren.

Der Erfindung lag daher die Aufgabe zugrunde, ein Lebensmittel-Gargerät zum Erhitzen und/oder Garen von Lebensmitteln aufzuzeigen, mithilfe dessen eine einfache und schonende Zubereitung des Lebensmittels bei verringertem Energieaufwand möglich ist.

Die Erfindung löst die ihr zugrundeliegende Aufgabe bei einem Lebensmittelgargerät zum Erhitzen und/oder Garen von Lebensmitteln der vorbezeichneten Gattung mit den Merkmalen von Anspruch 1. Insbesondere ist die Steuereinheit zum getakteten Ansteuern der Strahlungs-Heizelemente ausgebildet, derart, dass mindestens eines der mehreren Heizelemente über zumindest eine vorbestimmbare Zeitdauer für ein definiertes Zeitintervall einschaltbar und für ein definiertes Zeitintervall ausschaltbar ist.

Erfindungsgemäß wird hier der Ansatz verfolgt, dass durch das gezielte Ein- und Ausschalten wenigstens eines, mehrerer oder sämtlicher Strahlungs-Heizelemente der Heizeinrichtung innerhalb des Garraums mittels der Steuereinheit eine bedarfsgerechte und energieeffiziente Temperatursteuerung im Garraum möglich ist. Die Steuereinheit ist insbesondere dazu eingerichtet, in Abhängigkeit von dem im Garraum benötigten Temperaturniveau die Heizelemente derart getaktet anzusteuern, dass die gewünschte Temperatur einfach, schnell und energiesparend einstellbar ist, aber ein Überhitzen des Garraums vermieden ist. Das getaktete Ansteuern ist insbesondere in Abhängigkeit von dem innerhalb des Garraums erreichten Temperaturniveau anpassbar. Vorzugsweise kann die Größe der Zeitintervalle, in denen das oder die Heizelemente ein- oder ausschaltbar sind, variiert werden. Eine andere Ausführung sieht vor, dass die Anzahl der Strahlungs-Heizelemente zum Erzeugen einer Wärmestrahlung im Garraum, die getaktet angesteuert werden, veränderbar ist. Mithilfe der erfindungsgemäßen getakteten Ansteuerung ist im Vergleich zur Zubereitung mit herkömmlichen Gargeräten der Energiebedarf auf weniger als die Hälfte, vorzugsweise auf ein Drittel des sonst üblichen Energiebedarfs reduziert. Statt beispielsweise 17 kW pro Stunde kann der Energiebedarf mit einem erfindungsgemäßen Gargerät auf etwa 5 kW pro Stunde reduziert werden, wobei gleiche Mengen an Lebensmitteln in einem vergleichbaren Zeitraum zubereitet werden können.

Eine bevorzugte Weiterbildung der Erfindung sieht vor, dass zwei, drei, vier oder mehr Heizelemente innerhalb des Garraums angeordnet sind, wobei die Steuereinheit dazu eingerichtet ist, mehrere, vorzugsweise sämtliche Heizelemente über die vorbestimmbare Zeitdauer in einer vorbestimmten Abfolge zum Erzeugen einer Wärmestrahlung im Garraum anzusteuern. Die zum Erzeugen der Wärmestrahlung im Garraum verwendeten mehreren Strahlungs-Heizelemente werden insbesondere gestaffelt, alternierend oder auch phasenverschoben angesteuert. Die Anzahl der am Gargerät eingesetzten Heizelemente kann in Abhängigkeit von der Baugröße des Gargeräts variieren. Vorzugsweise sind mindestens zwei Heizelemente im Garraum angeordnet, die zum Beispiel abwechselnd an- und ausgeschaltet werden. Alternativ kann auch nur eines der beiden Heizelemente getaktet angesteuert werden. In einer Ausführungsform, in der vier Heizelemente im Garraum vorgesehen sind, können jeweils zwei Heizelemente zu einer Gruppe von Heizelementen zusammengefasst werden, wobei jede Gruppe von Heizelementen jeweils individuell zu der anderen Gruppe von Heizelementen getaktet angesteuerbar ist. Beide Gruppen von Heizelementen können gleichzeitig getaktet angesteuert werden, wobei beide Gruppen von Heizelementen phasenverschoben, um beispielsweise 180° zueinander getaktet sind. Damit ist bewirkt, dass die eine Gruppe von Heizelementen eingeschaltet ist, während die andere Gruppe von Heizelementen ausgeschaltet ist, und umgekehrt. Zwischen einem von der Steuereinheit an eine Gruppe gesendeten Ausschaltimpuls und einer von der Steuereinheit an die andere Gruppe gesendeten Einschaltimpuls können ebenfalls vorbestimmbare Zeitintervalle liegen, in denen keines der Heizelemente eingeschaltet ist.

Eine Weiterbildung sieht vor, dass die vorbestimmbare Zeitdauer für das getaktete Ansteuern der Heizelemente einen oder verschiedene Betriebszustände des Gargerätes definiert, indem das Gargerät auf einer vorgegebenen Temperatur warmgehalten und/oder das Lebensmittel zubereitet wird. Das getaktete Ansteuern der Heizelemente wird bevorzugt in verschiedenen Betriebszuständen des Gargeräts angewendet, wobei ein Betriebszustand als Warmhaltezustand für das Gargerät definiert ist, in dem kein Lebensmittel zubereitet und das Gargerät und auf einem deutlich reduzierten Temperaturniveau in Bereitschaft gehalten wird. Mit dem getakteten Ansteuern wird eine Grundwärme innerhalb des Garraums erzeugt, sodass das Gargerät nie vollständig auskühlt. Damit kann das erfindungsgemäße Gargerät schnell wieder auf ein Temperaturniveau für die Zubereitung des Lebensmittels gebracht werden. Vorzugsweise erfolgt das getaktete Ansteuern der Heizelemente auch in einem Betriebszustand des Gargeräts, in dem das Gargerät direkt zur Zubereitung der Lebensmittel verwendet wird. Durch das getaktete Ansteuern der Heizelemente im Betrieb des Gargeräts ist eine effiziente Art der Zubereitung bewirkt, ohne dass die Temperatur im Garraum ungewollt überschritten wird, so dass eine einfache aber zugleich schonende Zubereitung des Lebensmittels erreicht ist.

Vorzugsweise ist an dem Gargerät ein Temperatursensor zum Erfassen der Garraumtemperatur vorgesehen, wobei die Steuereinheit mit dem Temperatursensor gekoppelt ist. Vorzugsweise erfolgt das getaktete Ansteuern der Strahlungs-Heizelemente durch die Steuereinheit auf Grundlage des vom Temperatursensor im Garraum erfassten Temperaturniveaus. Vorzugsweise ist der Temperatursensor ein Thermoelement, das in einen Bereich des Garraums vorsteht.

Gemäß einer bevorzugten Ausführungsform weist die Steuereinheit eine Steuerelektronik und mehrere von der Steuerelektronik ansteuerbare Schaltelemente auf, wobei jedes Schaltelement mit wenigstens einem der Heizelemente verschaltet ist. Mithilfe der gezielt durch die Steuerelektronik der Steuereinheit ansteuerbaren Schaltelemente ist eine einfache Möglichkeit des individuellen getakteten Ansteuerns wenigstens eines der Strahlungs-Heizelemente erreicht. In einer Ausführung ist mit jedem Heizelement ein Schaltelement verschaltet. In einer möglichen Ausführung bilden mehrere Strahlungs-Heizelemente eine Gruppe, welche ihrerseits mit einem Schaltelement verschaltet ist. Durch das Ansteuern des Schaltelements werden dann die Heizelemente gezielt gemäß den vorbestimmbaren Zeitintervallen ein- und wieder ausgeschaltet.

Gemäß einer bevorzugten Weiterbildung ist das Schaltelement ein Halbleiter-Schalter, vorzugsweise ein Triac. Mithilfe eines solchen Halbleiter-Schalters ist eine einfache Schaltfunktion zum Umsetzen des getakteten Ansteuerns der Heizelemente verwirklicht. Ein solcher Halbleiter-Schalter weist eine Steuerelektrode auf, die sobald an dieser eine ausreichend hohe Steuerspannung bzw. -strom anliegt, zwischen zwei Hauptelektroden des Halbleiter-Schalters schaltet, sodass dann ein Strom durch das oder die mit dem Halbleiter-Schalter verschalteten Heizelement(en) fließt und das angesteuerte Heizelement sich einschaltet. Fällt die Spannung bzw. der Strom an der Steuerelektrode unterhalb eines vorbestimmten Wertes, wird der Stromfluss zwischen den Hauptelektroden unterbrochen und das oder die damit verschalteten Heizelemente ausgeschaltet. Das Erzeugen des Steuersignals zum Ansteuern des Halbleiter-Schaltelements wird durch die Steuerelektronik erzeugt.

Gemäß einer Weiterbildung des Gargeräts sind die Strahlungs-Heizelemente als Infrarot-Heizelemente, vorzugsweise als Infrarot-Strahler ausgebildet. Mithilfe der Infrarot(IR)-Strahler wird gezielt infrarote Strahlung in Richtung eines im Garraum angeordneten Lebensmittels abgegeben, womit eine energieeffiziente Erwärmung möglich ist. Die Infrarot-Heizelemente weisen bevorzugt eine Plattenform auf, womit eine großflächige Abgabe von Wärmestrahlung bewirkt ist. Das als Infrarot-Heizelement, bevorzugt als Infrarot-Strahler ausgebildete Heizelement ist dazu eingerichtet, vornehmlich Wärmestrahlung an nur einem seiner Flächenbereiche abzugeben, vornehmlich an der dem Garraum zugewandten Fläche des Infrarot-Heizelements. Dadurch ist eine direkte Erwärmung des Lebensmittels im Garraum bewirkt und eine unerwünschte Erwärmung der den Garraum begrenzenden Wandteile vermieden.

Vorzugsweise sind die Heizelemente in einem oder mehreren den Garraum begrenzenden Wandteilen des Gargeräts angeordnet. Vorzugsweise sind die als Infrarot-Heizelemente ausgebildeten Heizelemente zumindest in einem die Oberseite des Garraums begrenzenden Wandteil angeordnet. Zusätzlich oder alternativ können die Heizelemente zum Erzeugen der Wärmestrahlung auch in den Seitenwänden, dem Bodenteil und/oder dem die Rückwand ausbildenden Wandteil angeordnet sein. Vorzugsweise sind die Heizelemente in die den Garraum begrenzenden Wandteile eingelassen, sodass diese innenseitig nicht vorstehen. Ein direkter Kontakt mit den Heizelementen durch zum Beispiel ein in den Garraum eingebrachtes Lebensmittel ist damit auf vorteilhafte Weise vermieden.

Eine Weiterbildung des erfindungsgemäßen Gargeräts sieht vor, dass dem Garraum mindestens ein Gebläse zum Erzeugen eines Luftstroms innerhalb des Garraums zur Wärmeverteilung während der Lebensmittel-Zubereitung zugeordnet ist. Mithilfe des Gebläses erfolgt ein konvektiver Transport thermischer Energie auf Bereiche des Lebensmittels, die von der durch die Strahlungs-Heizelemente erzeugten Wärmestrahlung nur schwer erreicht wird. Damit ist eine homogene Wärmeverteilung innerhalb des Garraums erreicht, was ein gleichmäßiges Er- und Durchwärmen des zuzubereitenden Lebensmittels ermöglicht. Die schonende Zubereitung des Lebensmittels ist weiter verbessert und ein ungleichmäßiger Bräunungsgrad auf der Oberseite des Lebensmittels vermieden. Gemäß einer bevorzugten Ausführung werden zwei Gebläse an der Rückwand des Garraums gegenüberliegend zur Öffnung im Geräte-Gehäuse zum Erzeugen des Luftstroms angeordnet.

Ein weiterer Aspekt der Erfindung, für den separat und in Kombination mit dem vorgenannten Erfindungsgegenstand in Form einer vorteilhaften Weiterbildung des Erfindungsgegenstands nach Anspruch 1 Schutz beansprucht wird, betrifft ein Gargerät, das sich dadurch auszeichnet, dass sämtliche den Garraum begrenzenden Wandteile zumindest partiell mit einer Antihaft-Beschichtung ausgerüstet sind. Mithilfe der Antihaft-Beschichtung ist eine vereinfachte Reinigung der den Garraum begrenzenden Wandteile bewirkt. Insbesondere sind zumindest die Flächenbereiche der Wandteile mit einer solchen Antihaft-Beschichtung versehen, welche die Wandflächen des Garraums innerhalb des Gargeräts definieren. Vorzugsweise wird zur Ausbildung Polytetrafluorethylen, auch bezeichnet als PTFE, Keramik oder Emaille verwendet. Die angegebenen Materialien weisen eine hohe Temperaturbeständigkeit auf und sind relativ unempfindlich gegen chemische Lösungsmittel, die möglicherweise für die Reinigung des Garraums verwendet werden. Zudem weisen einige der angegebenen Antihaft-Beschichtungen auch eine vorteilhafte Widerstandsfähigkeit gegen mechanische Beeinflussung auf.

Eine Weiterbildung der Erfindung sieht vor, dass der Öffnung im Gehäuse ein beweglich am Gehäuse aufgenommenes Verschlussteil zum abdichtenden Verschließen der Öffnung zugeordnet ist. Mithilfe des Verschlussteils kann der Garraum insbesondere abdichtend verschlossen werden, sodass die im Garraum erzeugte Wärme während der Zubereitung des Lebensmittels im Garraum verbleibt und effektiv zum Erwärmen und Garen des Lebensmittels genutzt wird. Zudem ist mit dem Verschlussteil auch ein entsprechender Wärmerückhalt im Garraum beim Halten des Gargeräts in seinem Bereitschaftszustand, in dem das Gargerät auf einem deutlich reduzierten, aber im Vergleich zur Umgebung erhöhten Temperaturniveau gehalten wird, erreicht. Etwaige Wärmeverluste werden dadurch auf ein Minimum reduziert. Es ist vorgesehen, dass das Verschlussteil beweglich an einem Abschnitt des Geräte-Gehäuses angeordnet ist. Beispielsweise kann das Verschlussteil mittels eines Scharniers am Gehäuse des Gargeräts befestigt sein.

In einer bevorzugten Ausführung ist das Verschlussteil mittels einer Linearführung mit dem Geräte-Gehäuse verbunden, mittels derer das Verschlussteil aus seiner Schließstellung in eine Offenstellung bringbar ist. Das abdichtend mit dem Geräte-Gehäuse in Kontakt bringbare Verschlussteil wird zum Überführen in seine Offenstellung translatorisch bewegt, wobei das Verschlussteil in seiner Ausrichtung zur Öffnung im Gehäuse unverändert bleibt. Damit ist das Überführen des Verschlussteils von seiner Schließstellung in die Offenstellung vereinfacht. Vorzugsweise weisen sowohl das Geräte-Gehäuse als auch das Verschlussteil eine thermische Isolierung auf, womit der Wärmerückhalt innerhalb des Garraums weiter verbessert ist. Das Verschlussteil weist eine vergrößerte Wandstärke auf, wobei mit der Isolierung versehene Wandbereiche des Verschlussteils in entsprechende Bereiche der Öffnung am Geräte-Gehäuse eingeschoben werden. Damit ist insbesondere einem Wärmeverlust im Bereich der Öffnung des Geräte-Gehäuses entgegengewirkt und gleichzeitig kann über die Linearführung eine simple Trennung des Verschlussteils vom restlichen Geräte-Gehäuse vorgenommen werden.

Eine bevorzugte Weiterbildung sieht vor, dass mit dem beweglich aufgenommenen Verschlussteil eine Gargutaufnahme für das Lebensmittel koppelbar ist. Mit der konstruktiven Verknüpfung der Gargutaufnahme mit dem die Öffnung verschließenden Verschlussteil ist eine einfache Möglichkeit geschaffen, zusammen mit dem Verschließen des Geräte-Gehäuses gleichzeitig das zuzubereitende Lebensmittel in eine vordefinierte Position innerhalb des Garraums zu verbringen. Vorzugsweise ist die Gargutaufnahme direkt mit dem die Öffnung verschließenden Verschlussteil koppelbar. In einer Ausführung der Erfindung kann die Gargutaufnahme in verschiedenen Höhen an der dem Garraum zugewandten Innenseite des Verschlussteils eingehängt werden.

Vorzugsweise sind das Verschlussteil und die Gargutaufnahme als Garschublade am Gargerät ausgebildet. Mit einer derartig erfindungsgemäßen Ausgestaltung ist ein einfaches Positionieren der zuzubereitenden Lebensmittel im Garraum erreicht. Vorzugsweise bildet die Gargutaufnahme in einer Ausführung den Boden der erfindungsgemäßen Garschublade aus, auf der die zuzubereitenden Lebensmittel einfach positioniert werden. In einer möglichen Ausgestaltung kann die Gargutaufnahme als ein Gitterkorb ausgebildet sein, der in Aufnahmen auf der Innenseite des Verschlussteils einhängbar ist. Vorzugsweise weist das Geräte-Gehäuses ein um die Öffnung geführtes Dichtelement auf, das in Anlage mit der dem Gehäuse zugewandten Innenseite des Verschlussteils bringbar ist. Das Dichtelement ist temperaturbeständig ausgebildet.

Gemäß einer Ausführungsform des Gargeräts hat die Gargutaufnahme einen Pfannenkörper, der an dem Verschlussteil oder an der das Verschlussteil aufnehmenden Linearführung einhängbar ausgebildet ist. Mit dem Vorsehen eines Pfannenkörpers ist eine einfache Ausgestaltung einer Gargutaufnahme für darauf zu verbringende Lebensmittel erreicht. Vorzugsweise weist der Pfannenkörper ein Flächenmaß auf, das geringfügig kleiner ist als die Größe des den Boden des Garraums definierenden Wandteils. Damit ist eine optimale Ausnutzung der freien Querschnittsfläche des Garraums möglich. In einer Ausführung weist die Gargutaufnahme insbesondere entlang ihrer Längsseiten nach außen vorstehende Haltestege auf, die dazu eingerichtet sind, mit Abschnitten der das Verschlussteil aufnehmenden Linearführung in Anlage gebracht zu werden. Die Linearführung wird insbesondere aus zwei entlang der Seitenwände des Garraums verlaufenden Führungsschienen ausgebildet, welche bevorzugt auf beiden Seiten des Garraums angeordnet und jeweils endseitig mit dem die Öffnung am Gehäuse verschließenden Verschlussteil verbunden sind.

Ein weiterer Aspekt der vorliegenden Erfindung betrifft ein Verfahren zum Zubereiten von Lebensmitteln, insbesondere von Fleischerzeugnissen und/oder Tiefkühlprodukten, insbesondere unter Verwendung eines Lebensmittel-Gargeräts gemäß einer der vorstehend beschriebenen bevorzugten Ausführungsformen.

Das erfindungsgemäße Verfahren löst ebenfalls die eingangs beschriebene, dem Lebensmittel-Gargerät zugrunde gelegte Aufgabe mit den Schritten: Bereitstellen eines zu erhitzenden und/oder zu garenden Lebensmittels, Eingeben des Lebensmittels in einen, vorzugsweise geschlossenen Garraum, Erhitzen des Lebensmittels mittels einer mehrere Strahlungs-Heizelemente aufweisenden Heizeinrichtung, und getaktetes Ansteuern der Strahlungs-Heizelemente mittels einer Steuereinheit, derart, dass mindestens eines der mehreren Heizelemente über zumindest eine vorbestimmbare Zeitdauer für ein definiertes Zeitintervall eingeschaltet und dann für ein definiertes Zeitintervall wieder ausgeschaltet wird, wobei vorzugsweise das getaktete Ansteuern vor, während oder nach dem Zubereiten des Lebensmittels erfolgt.

Mithilfe der erfindungsgemäßen Verfahrensschritte ist eine einfache und zugleich schonende Zubereitung der Lebensmittel bei einem im Vergleich zu herkömmlichen Verfahren deutlich verringerten Energieaufwand möglich. Insbesondere während des Warmhaltens des Gargeräts in einem Bereitschaftszustand auf einer Temperatur, die im Vergleich zu herkömmlichen Zubereitungsverfahren niedriger ist, wird nur ein Bruchteil der sonst für das Halten des Gargeräts im Bereitschaftszustand erforderlichen Energie benötigt. Mithilfe der mehreren im Garraum angeordneten Strahlungs-Heizelemente erfolgt zu Beginn des Zubereitens ein hoher Wärmeeintrag durch die von den Heizelementen erzeugte Wärmestrahlung, um auf die notwendige Temperatur zum Zubereiten des Lebensmittels zu gelangen. Das entsprechende Ansteuern der Heizelemente erfolgt mittels der Steuereinheit des Gargeräts, welche neben der Zubereitung des Lebensmittels mittels in der Steuerelektronik abgespeicherter Betriebsmodi auch zum getakteten Ansteuern der Strahlungs-Heizelemente ausgebildet ist. Insbesondere mit dem Annähern der Garraumtemperatur an eine vordefinierte Gartemperatur kann durch die Steuereinheit mindestens eines der Heizelemente in einen entsprechend getakteten Schaltzustand überführt werden, wodurch der Wärmeeintrag in den Garraum reduziert wird. Mit Erreichen der Gartemperatur können weitere der mehreren wie auch sämtliche Heizelemente in den entsprechenden getakteten Schaltzustand überführt werden. Vorzugsweise werden mehrere oder sämtliche der Heizelemente in einer vorbestimmten Abfolge angesteuert, was bedeutet, dass die Heizelemente für ein vorbestimmtes Zeitintervall eingeschaltet und auch wieder ausgeschaltet werden. Das Ein- und Ausschalten der verschiedenen Heizelemente kann gestaffelt, alternierend oder auch phasenverschoben erfolgen.

In einer bevorzugten Ausführung wird die Anzahl der angesteuerten Heizelemente verändert oder die Größe des Zeitintervalls betreffend das Ein- und Ausschalten der getaktet angesteuerten Heizelemente angepasst, wobei die Ein- und Ausschaltintervalle unabhängig voneinander anpassbar sind.

Die zum erfindungsgemäßen Lebensmittel-Gargerät beschriebenen, bevorzugten Ausführungsformen bzw. Weiterbildungen sind auch zugleich bevorzugte Ausführungsformen des erfindungsgemäßen Verfahrens zum Zubereiten von Lebensmitteln, welches sich dieselben Vorteile zu eigen macht wie das oben beschriebene Gargerät.

Ein bevorzugtes Ausführungsbeispiel der Erfindung, aus dem sich weitere erfinderische Merkmale ergeben, ist unter Bezugnahme auf die nachfolgend aufgeführten Figuren näher beschrieben. Hierbei zeigen:
- Fig. 1: eine perspektivische Ansicht eines Ausführungsbeispiels eines erfindungsgemäßen Lebensmittel-Gargeräts,
- Fig. 2: eine perspektivische Ansicht des Gargeräts nach Fig. 1 mit seinem Verschlussteil in der Offenstellung,
- Fig. 3 und 4: perspektivische Ansichten des Gargeräts nach Fig. 1 mit vom Gargerät entferntem Verschlussteil zum Verdeutlichen des Aufbaus innerhalb des Garraums,
- Fig. 5: eine perspektivische Ansicht des Gargeräts nach Fig. 1, welche die Kopplung zwischen dem Verschlussteil und der Gargutaufnahme verdeutlicht,
- Fig. 6: eine perspektivische Ansicht einer erfindungsgemäßen Gargutaufnahme, und
- Fig. 7: eine schematische Darstellung eines Schaltdiagramms zwischen der Steuereinheit des Gargeräts und seinen Strahlungs-Heizelementen.

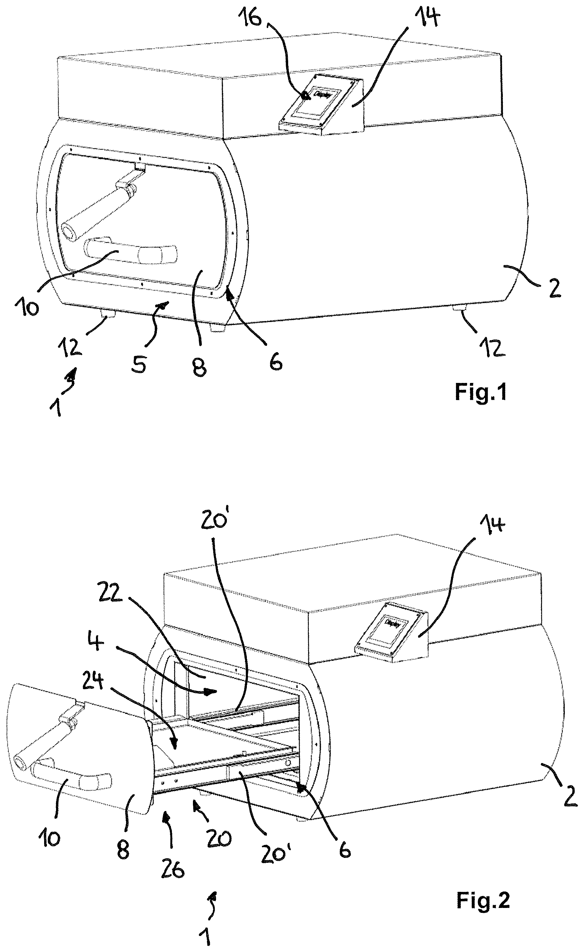

Fig. 1 zeigt ein Lebensmittel-Gargerät 1 zum Erhitzen und/oder Garen von insbesondere Fleischerzeugnissen und/oder Tiefkühlprodukten. Das Gargerät 1 weist ein Geräte-Gehäuse 2 auf, in dem ein Garraum 4 (Fig. 2) für ein zuzubereitendes Lebensmittel vorgesehen ist. Das Gehäuse 2 weist an der Gehäusefront 5 eine Öffnung 6 im Gehäuse 2 als Zugang zum Garraum 4 auf. Über die Öffnung 6 kann das zuzubereitende Lebensmittel in den Garraum 4 des Gargeräts 1 eingeführt werden. Die Öffnung 6 kann mittels eines beweglich am Gehäuse 2 aufgenommenen Verschlussteils 8 verschlossen werden. Am Verschlussteil 8 ist ein Handgriff 10 zum Verbringen des Verschlussteils 8 aus seiner Schließstellung (Fig. 1) in seine Offenstellung (Fig. 2) angeordnet.

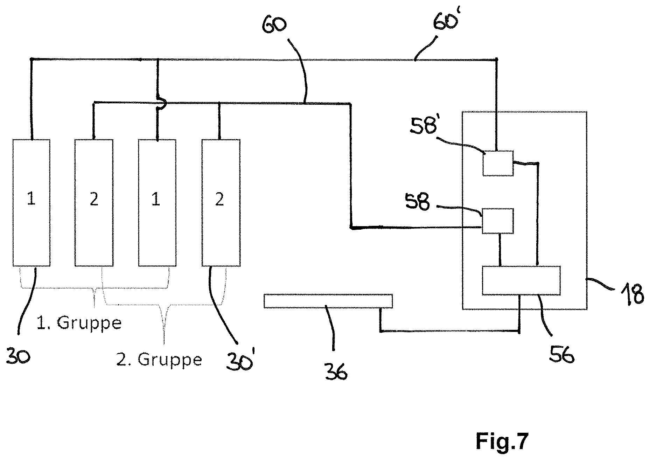

Das Gehäuse weist an seiner Unterseite mehrere Aufstellfüße 12 auf. Das Gargerät 1 weist ferner ein Bedienteil 14 zum Einstellen verschiedener Gar- und Zubereitungsprogramme am Gargerät 1 auf. Das Bedienteil 14 weist zu diesem Zweck ein von Hand betätigbares Display 16 auf, mithilfe dessen ein Benutzer die verschiedenen Funktionen am Gargerät 1 einstellen bzw. sich durch verschiedene Programme des Gargeräts führen lassen kann. Das Display 16 ist mit einer in Fig. 7 schematisch dargestellten Steuereinheit 18 signalleitend verbunden.

Fig. 2 zeigt das Lebensmittel-Gargerät 1 mit geöffnetem Verschlussteil 8, sodass der Zugang in den Garraum 4 über die Öffnung 6 am Gehäuse 2 möglich ist. Das Verschlussteil 8 ist mittels einer Linearführung 20 aufgenommen, welche zwei Führungsschienen 20` umfasst, die jeweils mit den den Garraum 4 seitlich begrenzenden Wandteilen 22 einerseits und endseitig mit der dem Garraum zugewandten Innenseite des Verschlussteils 8 verbunden sind.

Mit dem Verschlussteil 8 ist eine Gargutaufnahme 24 für das Lebensmittel koppelbar, wobei die Gargutaufnahme 24 und das beweglich am Gehäuse aufgenommene Verschlussteil 8 als eine Art Garschublade 26 am Gargerät 1 ausgebildet sind.

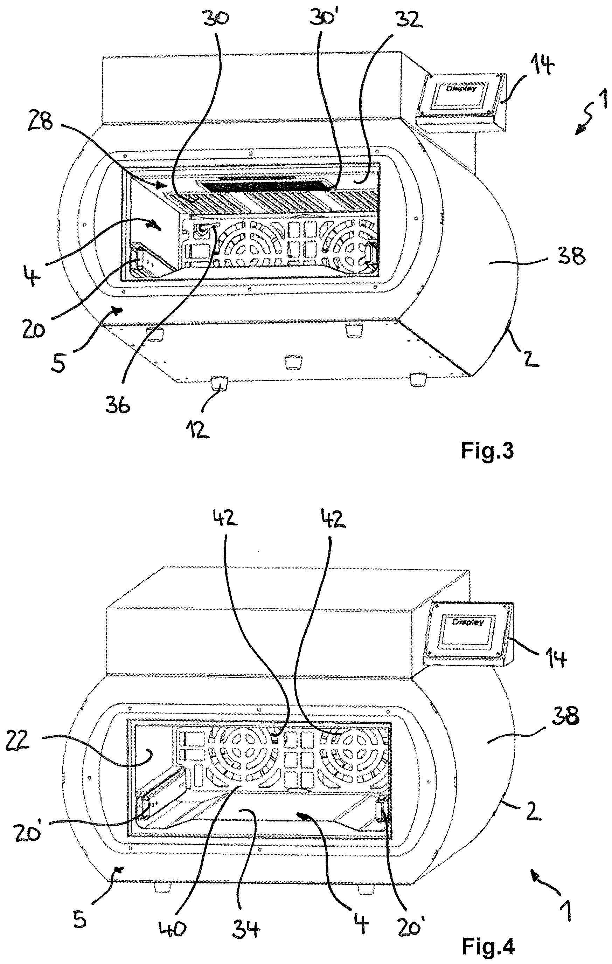

Fig. 3 zeigt den Garraum 4, in dem eine Heizeinrichtung 28 mit mehreren Strahlungs-Heizelementen 30 zum Erzeugen einer Wärmestrahlung in Richtung des im Garraum angeordneten Lebensmittels vorgesehen. Die Heizeinrichtung 28 ist mit der Steuereinheit 18 (Fig. 7) signalleitend gekoppelt, wobei die Steuereinheit zum getakteten Ansteuern der Strahlungs-Heizelemente 30, 30' ausgebildet ist, derart, dass mindestens eines der mehreren Heizelemente über zumindest eine vorbestimmbare Zeitdauer für ein definiertes Zeitintervall einschaltbar und für ein definiertes Zeitintervall ausschaltbar ist.

Mithilfe der Steuereinheit 18 können eines, mehrere oder sämtliche Heizelemente 30, 30' in kontinuierlicher Abfolge eingeschaltet und dann wieder ausgeschaltet werden. Das Ein- und Ausschalten der verschiedenen Heizelemente 30, 30' kann gestaffelt, alternierend oder auch phasenverschoben erfolgen. In der vorliegend gezeigten Ausführung sind insgesamt vier Heizelemente 30, 30' innerhalb des Garraums 4 angeordnet, deren Anzahl jedoch in Abhängigkeit von der Größe des Gargeräts 1 sowohl in der Anzahl nach unten als auch nach oben variieren kann.

Die Heizelemente 30, 30' sind vorliegend an einem die Oberseite des Garraums definierenden Wandteil 32 angeordnet. Die Heizelemente 30, 30' können an jedem beliebigen, den Garraum 4 am Geräte-Gehäuse 2 definierenden Wandteil 22, 32, 34 (Fig. 4) angeordnet sein. Innerhalb des Garraums 4 ist ferner ein Temperatursensor 36 zum Erfassen der Garraumtemperatur angeordnet, welcher mit der Steuereinheit 18 signal-übertragend gekoppelt ist. In der vorliegend gezeigten Ausführung sind die Strahlungs-Heizelemente 30, 30' als Infrarot-Heizelemente vorzugsweise als Infrarot-Strahler ausgebildet. Um die von den Strahlungs-Heizelementen 30, 30' erzeugte Wärmestrahlung innerhalb des Garraums 4 zu halten, weist das Geräte-Gehäuse 2 ein nicht gezeigtes, den Garraum 4 von der Umgebung abschirmende Wärmedämmmaterial auf, welches innerhalb des Geräte-Gehäuses 2 zwischen den den Garraum 4 ausbildenden Wandteilen 22, 32, 34 und der das Gargerät außenseitig begrenzenden Außenwandung 38 angeordnet ist.

Wie Fig. 4 ferner verdeutlicht sind an einem die Rückwand des Garraums 4 ausbildenden Wandteil 40 zwei Gebläse 42 zum Erzeugen eines Luftstroms innerhalb des Garraums angeordnet. Mithilfe der Gebläse 42 wird eine homogene Wärmeverteilung während der Zubereitung des Lebensmittels innerhalb des Garraums erreicht.

Gemäß einem bevorzugten Aspekt sind sämtliche den Garraum begrenzenden Wandteile 22, 32, 34, 40 zumindest partiell mit einer Antihaft-Beschichtung versehen. Speziell die Wandflächen der Wandteile, welche den Garraum 4 für die zuzubereitenden Lebensmittel definieren, weisen eine solche Antihaft-Beschichtung auf. Als Material für eine solche Antihaft-Beschichtung wird beispielsweise Keramik, Emaille oder PTFE verwendet.

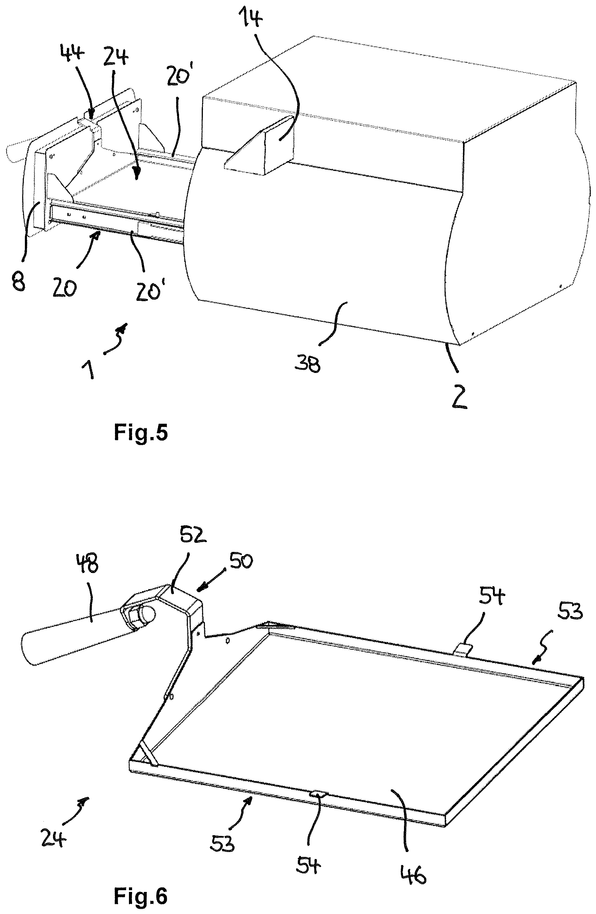

Fig. 5 zeigt, dass die Gargutaufnahme 24 für das Lebensmittel mit dem Verschlussteil 8 koppelbar ist. Das Verschlussteil 8 weist insbesondere an einer Oberseite eine Aufnahme 44 für Abschnitte der Gargutaufnahme 24 auf, welche in die Aufnahme 44 am Verschlussteil 8 insbesondere formschlüssig eingehängt werden.

Fig. 6 zeigt eine Ansicht der Gargutaufnahme 24, welche einen Pfannenkörper 46 und eine mit dem Pfannenkörper 46 gekoppelte Handhabe 48 zum manuellen Entkoppeln der Gargutaufnahme vom Verschlussteil 8 aufweist. Die Handhabe 48 ist mittels eines Verbindungsteils 50 mit dem Pfannenkörper 46 verbunden. Das Verbindungsteil 50 weist insbesondere einen mit der Aufnahme 44 am Verschlussteil 8 korrespondierenden Verrastabschnitt 52 auf. Zusätzlich zu dem Verrastabschnitt 52 sind an den Längsseiten 53 des Pfannenkörpers 46 zwei etwa senkrecht abstehende Haltestege 54 vorgesehen, welche mit den Führungsschienen 20` der das Verschlussteil 8 mit dem Gehäuse 2 koppelnden Linearführung korrespondieren. Die Gargutaufnahme 24 ist in der vorliegend gezeigten Ausführung zwischen den Führungsschienen 20' aufgenommen.

Fig. 7 zeigt ein Schaltungsdiagramm der Steuereinheit 18 des Gargeräts 1, das die Verschaltung mit den Strahlungs-Heizelementen 30, 30' verdeutlichen soll. Die Steuerungseinheit 18 umfasst eine Steuerelektronik 56, insbesondere einen Mikrochip, die dazu eingerichtet ist, die in der Steuerelektronik 56 gespeicherten Funktionen und Programme im Zusammenhang mit der Zubereitung unterschiedlichster Lebensmittel auszuführen.

Die Steuerelektronik 56 ist mit zwei Schaltelementen 58, 58` signalleitend gekoppelt, wobei jedes Schaltelement 58, 58' jeweils über Schaltleitungen 60, 60' mit zwei der vier abgebildeten Heizelemente 30, 30' verbunden ist. Die Steuereinheit 18 ist insbesondere auch mit dem Temperatursensor 36 signalleitend verbunden. Die zum Ansteuern der Strahlungs-Heizelemente verwendeten Schaltelemente 58, 58' sind als Halbleiter-Schalter, vorzugsweise als Triac ausgebildet, die über eine Steuerelektrode zum Ansteuern der Schaltelemente 58, 58' verfügen und über zwei Hauptelektroden, welche die stromleitende Verbindung zu den Heizelementen 30, 30' herstellen.

In einer Ausführungsform der Erfindung können mehrere, vorzugsweise sämtliche Heizelemente 30, 30' über eine vorbestimmbare Zeitdauer in einer vorbestimmten Abfolge zum Erzeugen einer Wärmestrahlung im Garraum 4 angesteuert werden. Die getaktet angesteuerten Heizelemente 30, 30' werden ganz individuell eingeschaltet, insbesondere in Abhängigkeit von der im Garraum 4 vorhandenen Garraumtemperatur im Vergleich zu der in Abhängigkeit von dem gewählten Programm zu erreichenden Garraumtemperatur.

Die zu Gruppen miteinander verbundenen Heizelemente 30, 30' werden zum Beispiel gestaffelt, alternierend oder auch phasenverschoben angesteuert. Insbesondere können mithilfe der Steuerelektronik 56 die Zeitintervalle für das Einschalten und das Ausschalten der Heizelemente 30, 30' ganz individuell eingestellt werden.

Es ist jedoch erfindungsgemäß vorgesehen, dass die vorbestimmbare Zeitdauer für das getaktete Ansteuern der Heizelemente bestimmte Betriebszustände des Gargeräts definiert. Ein Betriebszustand kann beispielsweise die Zeitdauer sein, in der das Gargerät 1 nicht zum Zubereiten von Lebensmitteln verwendet wird, sondern das Gargerät 1 auf einer vorgegebenen Temperatur warmgehalten wird, die oberhalb der Umgebungstemperatur liegt, aber deutlich geringer ist als die Temperatur, welche zum zuverlässigen Zubereiten der Lebensmittel verwendet wird.

Ein weiterer Betriebszustand kann zum Beispiel die Zeitdauer sein, in der das Lebensmittel innerhalb des Garraums 4 zubereitet wird. Auch während des Zubereitens kann ein getaktetes Ansteuern der Strahlungs-Heizelemente 30, 30' erfolgen, sodass eine gezielte Abgabe einer bestimmten Wärmemenge auf das zuzubereitende Lebensmittel bewirkt ist. Insbesondere in Abhängigkeit von der Anzahl der im Garraum 4 zuzubereitenden Lebensmittel werden beispielsweise die Zeitintervalle für das Ein- und Ausschalten der Heizelemente angepasst. Jedoch ist die Ansteuerung durch die Steuerelektronik so abgestimmt, dass während des Zubereitens des Lebensmittels jedes der Strahlungs-Heizelemente 30, 30' im Garraum 4 durch die damit signalleitend verbundene Steuereinheit 18 in gleichem Maße in Betrieb genommen wird.

Mithilfe des erfindungsgemäßen Gargeräts 1 ist ein Verfahren zum Zubereiten von Lebensmitteln, insbesondere von Fleischerzeugnissen und/oder Tiefkühlprodukten, umsetzbar, welches die Schritte umfasst: Bereitstellen eines zu erhitzenden und/oder zu garenden Lebensmittels, Eingeben des Lebensmittels in einen, vorzugsweise geschlossenen, Garraum 4, Erhitzen des Lebensmittels mittels einer mehrere Strahlungs-Heizelemente 30, 30' aufweisenden Heizeinrichtung 28, und getaktetes Ansteuern der Strahlungs-Heizelemente 30, 30' mittels einer Steuereinheit 18, derart, dass mindestens eines der mehreren Heizelemente 30, 30' über zumindest eine vorbestimmbare Zeitdauer für ein definiertes Zeitintervall eingeschaltet und für ein definiertes Zeitintervall wieder ausgeschaltet wird.

Gemäß einer bevorzugten Weiterbildung erfolgt das getaktete Ansteuern vor, während oder nach dem Zubereiten des Lebensmittels.

Optional bzw. bevorzugt sind folgende Betriebsmodi und Einrichtungen der Steuereinheit 18 zum Ansteuern der Heizelemente:
Die Phasen während der die Heizelemente an und aus sind, lassen sich individuell einstellen und verändern. Beispielsweise kann ein Heizelement an und währenddessen ein anderes Heizelement aus sein. Dies gilt auch für die zwei bis fünf oder mehr Heizelemente. Beispielsweise kann ein Heizelement nur 0,01s an und anschließend ausgeschaltet werden. Invers wird ein anderes Heizelement in dieser Zeit aus- bzw. angeschaltet. Die Periode kann aber auch deutlich länger sein als 0,01s. Die Leistungsaufnahme kann beispielsweise sein 230V, 16A.

Die Antihaft-Beschichtung kann auch folgende Eigenschaften aufweisen. Es kann sich um eine Beschichtung handeln, die einen Lotus-Effekt aufweist. Alternativ kann auch ein AntiHaft-Lack als Beschichtung verwendet werden. Ein solcher Lack kann beispielsweise bei 600°C eingebrannt werden auf der Oberfläche. Dadurch ergibt sich dann eine Resistenz bei hohen inneren Temperaturen im Garraum von bis zu etwa 320°C oder mehr.

### Bezugszeichenliste:

- 1: Gargerät
- 2: Gehäuse
- 4: Garraum
- 5: Gehäusefront
- 6: Öffnung
- 8: Verschlussteil
- 10: Handgriff
- 12: Ausstellfüße
- 14: Bedienteil
- 16: Display
- 18: Steuereinheit
- 20: Linearführung
- 20': Führungsschiene
- 22: Wandteil
- 24: Gargutaufnahme
- 26: Garschublade
- 28: Heizeinrichtung
- 30, 30': Heizelement
- 32, 34: Wandteil
- 36: Temperatursensor
- 38: Außenwandung
- 40: Wandteil
- 42: Gebläse
- 44: Aufnahme
- 46: Pfannenkörper
- 48: Handhabe
- 50: Verbindungsteil
- 52: Verrastabschnitt
- 53: Längsseiten
- 54: Haltesteg
- 56: Steuerelektronik
- 58, 58': Schaltelement
- 60, 60': Schaltlleitung

## Patentansprüche

1. Lebensmittel-Gargerät (1) zum Erhitzen und/oder Garen von Lebensmitteln, insbesondere Fleischerzeugnissen und/oder Tiefkühlprodukten, mit
einem Geräte-Gehäuse (2),
wenigstens einem im Gehäuse (2) angeordneten Garraum (4) für das Lebensmittel, wobei der Garraum über wenigstens eine Öffnung (6) im Gehäuse (2) zugänglich ist,
einer dem Garraum (4) zugeordneten Heizeinrichtung (28) mit mehreren Strahlungs-Heizelementen (30, 30`) zum Erzeugen von Wärmestrahlung, und
einer Steuereinheit (18) zum Steuern des Gargerätes (1), die mit der Heizeinrichtung (28) signalleitend gekoppelt ist,
**dadurch gekennzeichnet, dass** die Steuereinheit (18) zum getakteten Ansteuern der Strahlungs-Heizelemente (30, 30`) ausgebildet ist, derart, dass mindestens eines der mehreren Heizelemente (30, 30`) über zumindest eine vorbestimmbare Zeitdauer für ein definiertes Zeitintervall einschaltbar und für ein definiertes Zeitintervall ausschaltbar ist.

2. Gargerät nach Anspruch 1,
**dadurch gekennzeichnet, dass** zwei, drei, vier oder mehr Heizelemente (30, 30`) innerhalb des Garraumes (4) angeordnet sind, wobei die Steuereinheit (18) dazu eingerichtet ist, mehrere, vorzugsweise sämtliche Heizelemente (30, 30`) über die vorbestimmbare Zeitdauer in einer vorbestimmten Abfolge zum Erzeugen einer Wärmestrahlung im Garraum (4) anzusteuern.

3. Gargerät nach Anspruch 1 oder 2,
**dadurch gekennzeichnet, dass** die vorbestimmbare Zeitdauer für das getaktete Ansteuern der Heizelemente (30, 30`) einen oder verschiedene Betriebszustände des Gargeräts (1) definiert, in dem das Gargerät (1) auf einer vorgegebenen Temperatur warmgehalten und/oder das Lebensmittel zubereitet wird.

4. Gargerät nach einem der Ansprüche 1 bis 3,
mit einem Temperatursensor (36) zum Erfassen der Garraumtemperatur, wobei die Steuereinheit (18) mit dem Temperatursensor (36) gekoppelt ist.

5. Gargerät nach einem der vorstehenden Ansprüche,
**dadurch gekennzeichnet, dass** die Steuereinheit (18) eine Steuerelektronik (56) und mehrere von der Steuerelektronik (56) ansteuerbare Schaltelemente (58, 58`) aufweist, wobei jedes Schaltelement (58, 58`) mit wenigstens einem der Heizelemente (30, 30`) verschaltet ist, wobei vorzugsweise das Schaltelement (58, 58`) ein Halbleiter-Schalter ist, bevorzugt ein Triac.

6. Gargerät nach einem der vorstehenden Ansprüche,
**dadurch gekennzeichnet, dass** die Strahlungs-Heizelemente (30, 30`) als Infrarot-Heizelemente, vorzugsweise Infrarot-Strahler, ausgebildet sind.

7. Gargerät nach einem der vorstehenden Ansprüche,
**dadurch gekennzeichnet, dass** die Heizelemente (30, 30`) in einem oder mehreren den Garraum (4) begrenzenden Wandteilen (22, 32, 34) des Gargeräts (1) angeordnet sind.

8. Gargerät nach einem der vorstehenden Ansprüche,
**dadurch gekennzeichnet, dass** dem Garraum (4) mindestens ein Gebläse (42) zum Erzeugen eines Luftstromes innerhalb des Garraums (4) zur Wärmeverteilung während der Lebensmittel-Zubereitung zugeordnet ist.

9. Gargerät nach dem Oberbegriff von Anspruch 1 oder einem der vorstehenden Ansprüche,
**dadurch gekennzeichnet, dass** sämtliche den Garraum (4) begrenzenden Wandteile (22, 32, 34, 40) zumindest partiell mit einer Antihaft-Beschichtung ausgerüstet sind, welche vorzugsweise folgende Materialien aufweisen, PTFE, Keramik oder Emaille.

10. Gargerät nach einem der vorstehenden Ansprüche,
**dadurch gekennzeichnet, dass** der Öffnung (6) im Gehäuse (2) ein beweglich am Gehäuse (2) aufgenommenes Verschlussteil (8) zum abdichtenden Verschließen der Öffnung (6) zugeordnet ist, wobei vorzugsweise das Verschlussteil (8) mittels einer Linearführung (20) mit dem Gehäuse (2) verbunden ist, mittels derer das Verschlussteil (8) aus seiner Schließstellung in eine Offenstellung bringbar ist.

11. Gargerät nach Anspruch 10,
**dadurch gekennzeichnet, dass** mit dem beweglich aufgenommenen Verschlussteil (8) eine Gargutaufnahme (24) für das Lebensmittel koppelbar ist.

12. Gargerät nach einem der Ansprüche 10 oder 11,
wobei das Verschlussteil (8) und die Gargutaufnahme (24) als Garschublade (26) am Gargerät (1) ausgebildet sind.

13. Gargerät nach einem der Ansprüche 11 und 12,
wobei die Gargutaufnahme (24) einen Pfannenkörper (46) hat, der an dem Verschlussteil (8) oder der das Verschlussteil (8) haltenden Linearführung (20) einhängbar ausgebildet ist.

14. Gargerät nach einem der Ansprüche 11 bis 13,
dass die Gargutaufnahme (4) eine Handhabe (48) zum Entkoppeln vom Verschlussteil (8) aufweist.

15. Verfahren zum Zubereiten von Lebensmitteln, insbesondere von Fleischerzeugnissen und/oder Tiefkühlprodukten, insbesondere unter Verwendung eines Lebensmittel-Gargeräts gemäß einer der vorstehenden Ansprüche, umfassend die Schritte:
Bereitstellen eines zu erhitzenden und/oder zu garenden Lebensmittels,
Eingeben des Lebensmittels in einen, vorzugsweise geschlossenen Garraum (4),
Erhitzen des Lebensmittels mittels einer mehrere Strahlungs-Heizelemente aufweisenden Heizeinrichtung (28), und
getaktetes Ansteuern der Strahlungs-Heizelemente (30, 30`) mittels einer Steuereinheit (18), derart, dass mindestens eines der mehreren Heizelemente (30, 30`) über zumindest eine vorbestimmbare Zeitdauer für ein definiertes Zeitintervall einschaltbar und für ein definiertes Zeitintervall ausschaltbar ist,
wobei vorzugsweise das getaktete Ansteuern der Heizelemente (30, 30`) vor, während oder nach dem Zubereiten des Lebensmittels erfolgt.
